Europäisches Patentamt

European Patent Office

Office européen des brevets

(11) Publication number: **0 068 704**
**B1**

(12) EUROPEAN PATENT SPECIFICATION

(45) Date of publication of patent specification: **15.04.87**

(21) Application number: **82303084.6**

(22) Date of filing: **15.06.82**

(51) Int. Cl.⁴: **G 01 P 1/07, G 01 P 3/489**

(54) Speed meter systems.

(30) Priority: **16.06.81 JP 91577/81**

(43) Date of publication of application:
**05.01.83 Bulletin 83/01**

(45) Publication of the grant of the patent:
**15.04.87 Bulletin 87/16**

(84) Designated Contracting States:
**DE FR GB**

(56) References cited:
**DE-A-2 730 699**
**US-A-3 731 301**
**US-A-4 176 546**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Fukamachi, Masaaki Kabushiki Kaiska Honda Rokku**
**3700, Aza Wadayama Oaza Shimonaka**
**Sadowara-cho Miyazaki-gun Miyazaki-ken (JP)**
Inventor: **Seuyoshi, Masahiko Kabushiki Kaisha Honda Rokku**
**3700, Aza Wadayama Oaza Shimonaka**
**Sadowara-cho Miyazaki-Ken (JP)**

(74) Representative: **Muir, Ian R. et al**
**HASELTINE LAKE & CO. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to speed meter systems.

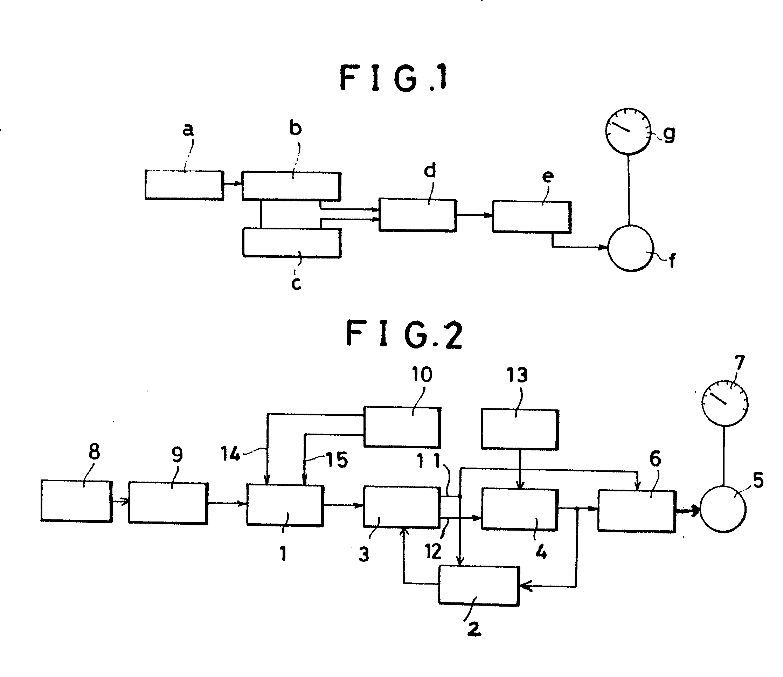

In Figure 1 of the accompanying drawing there is shown in block diagrammatic form a vehicle speed meter system as is known from DE—A—2730699, in which a pulse signal generated at a pulse signal generating means a corresponding to vehicle speed is counted at an initial stage for as predetermined period of time by a first counter b. After the counted value has been transmitted to a second counter c, a pulse signal according to a vehicle speed at the then present time is counted for a predetermined period of time also by the first counter b. At a subsequent stage there are generated at a comparator d, a judgement signal resulting from the difference (positive or negative) between the counted values of the two counters b and c, and a pulse difference signal. During the next predetermined period of time, that is, during the time that a new pulse signal corresponding to vehicle speed is being counted by the first and second counters b and c, the judgement signal and the pulse difference signal generated at the comparator d are transmitted to a memory e at the subsequent stage, and a standard pulse signal corresponding to these signals is generated from the memory e, which in this way serves as a distribution circuit, and thereby a pulse motor f is turned in a regular direction or a reverse direction, so that a pointer of an indication meter g moved by the pulse motor f indicates a measured value.

In this conventional system the movement of the pointer of the speed meter g is made merely by a resultant value obtained by subtraction between the counted value of the first counter b and the counted value of the second counter c, and therefore there is the problem that if there is generated an error in counting by either of the two counters b, c, this error cannot be eliminated and always remains in the counters b, c. Thus if such errors are generated they become accumulated in the resultant counted value.

Additionally, since this conventional system uses the pulse difference signal as the output of the comparator d, a large number of connecting lines corresponding to the number of pulses are required connecting between the comparator d and the next stage memory e, and thus the system becomes high in frequency of trouble and high in price.

A speed indication arrangement is also shown in US—A—4176546. However, in this arrangement a computer is used for calculation of the speed and a display arrangement is provided utilising first and second registers one of which is fed with the speed calculation of the computer and holds this speed for a time period and the second of which has its contents varied during that time period to record the change in position of a motor for the speed indicator. The variation is effected by a comparison being made of the contents of the two registers at the beginning of a time period to determine the rate of pulses to be fed to the indicator motor to cause a change in the indicated speed on the indicator controlled by the indicator motor, the pulse rate being dependent on the magnitude of the difference detected in the comparison and the direction of change caused by the pulses being determined by the sense of the difference between the numbers stored in the two registers.

A change in the contents of the second register results from reading out the motor shaft position by means of a shaft encoder and feeding the amplified read out signal in parallel to the second register. Comparison is effected at the beginning of a time period and thereafter no variation in the compared inputs during the time period causes a change in the motor control operation.

According to the present invention there is provided a speed meter system comprising, for operating a pulse motor that is driven by an output of a standard pulse signal source through a distribution circuit to drive an indication meter, a first counter which counts for a predetermined period of time a pulse signal the count of which over said period corresponds to the speed to be metered, a second counter and a comparator circuit which compares said count of the first counter and a second count contained in the second counter and generates a first judgement signal showing the difference, positive or negative, between the two counts and a second judgement signal of equality or inequality of the two counts;

characterised in that the system further comprises a gate circuit which is placed in open condition, when and for so long as there is any difference between said two counts to input from the standard pulse signal source to the second counter a standard pulse signal that is added to or subtracted from the second count previously held in the second counter according to said first judgement signal of the comparator circuit, the count of said first counter and the changing count of said second counter being continuously compared so that the counted value of the second counter is varied one by one until the resultant counted value becomes equal to the counted value of the first counter whereupon said gate circuit is placed in a closed condition; in that the second counter is provided with a reset circuit for making the counted value thereof zero by inputting of a power source thereinto; and in that the distribution circuit distributing the standard pulse signal inputted thereto through the open condition gate circuit to plural poles of the pulse motor (5) in sequence in the positive direction or the negative direction according to the first judgement signal of the comparator circuit to operate indication means of the indication meter to indicate the metered speed.

Direct feeding to the second counter of the standard pulse signal which is also fed to the pulse motor can result in a constructionally simple arrangement with accurate following by the speed indicator of the counted speed.

For a better understanding of the invention and to show how the same may be carried into effect, reference will now be made, by way of example, to Figure 2 of the accompanying drawings which is a block diagram of a speed meter system of a vehicle.

In Figure 2 numeral 1 denotes a first counter which counts for a predetermined period of time the number of pulses of a pulse signal corresponding to a vehicle running speed or an engine rotation speed, numeral 2 denotes a second counter, and numeral 3 denotes a comparator circuit which compares a counted value of the first counter 1 and a counted value of the second counter 2 and generates a first judgement signal showing the difference (positive or negative) between the counted values and a second judgement signal of equality or inequality of these two counted values. Numeral 4 denotes a gate circuit which is made open when there is any difference between the counted value of the first counter 1 and the counted value of the second counter 2.

A standard pulse signal inputted to the second counter 2 through the gate circuit 4 when in open condition is added to or subtracted one by one from a previously holding counted value according to the first judgement signal of the comparator circuit 3, and thereby the counted vlaue of the second counter 2 is changed step by step until the resultant counted value becomes equal to the counted value of the first counter 1.

Numeral 5 denotes a pulse motor. Numeral 6 denotes a distribution circuit which distributes the standard pulse signal which is inputted thereto through the gate circuit 4 when in open condition, in sequence, to plural poles of the pulse motor 5 in a positive direction or a negative direction according to the first judgement signal of the comparator circuit 3. Numeral 7 denotes an indication meter which has the pulse motor 5 as a driving source thereof so that a pointer thereof is turned in one direction or in the reverse direction by regular turning or reverse turning of the pulse motor 5 for indicating the vehicle speed or the engine speed.

Numeral 8 denotes a pulse signal generating means which generates a pulse signal corresponding to a vehicle speed or to an engine speed. In the case of vehicle speed, the generation of the pulse signal is effected by providing plural magnetic poles of mutually opposite polarities disposed alternately on the peripheral surface of a wheel axle of the vehicle. A hall element facing these rotary magnetic poles converts the changing magnetic field into a pulse signal. In the case of the engine speed, the generation of the pulse signal is effected, for example, by utilising the high voltage pulses of the ignition coil of the engine. Numeral 9 denotes a waveform shaping circuit for the pulse signal generated at the pulse signal generating means 8.

Numeral 10 denotes a control circuit having a standard oscillation circuit and serving to generate a count starting signal and a count ending signal so that a desired counting period of time of the first counter 1 may be determined by these two signals. The first counter 1 is so operated as to count the number of pulses of the pulse signal for the predetermined period of time and transmit the counted value thereof to the next stage comparator circuit 3.

The comparator circuit 3 serves to compare the counted value of the first counter 1 and the counted value of the second counter 2 and generate both the first judgement signal (difference between the two counted values) and the second judgement signal (equality or inequality of the two counted values). The first judgement signal appears on a signal line 11 as a signal of "H" (High) level when the counted value of the first counter 1 is larger than the counted value of the second counter 2 (positive difference), as a signal of "L" (Low) level when the counted value of the first counter 1 is smaller than the counted value of the second counter 2 (negative difference).

If the two counted values are equal to one another, the first judgement signal may be either a signal of "H" or a signal of "L".

The second judgement signal appears on a signal line 12 as a signal of "L" when the two counted values are equal, and as a signal of "H" when they are not equal.

The gate circuit 4 is made open by the signal "H" appearing on the signal line 12 of the comparator circuit 3 when there is a value difference between the two counted values, and permits, during that period of time, pulses of a standard pulse signal generated continuously at an oscillation circuit 13 for driving the pulse motor 5 to pass therethrough to be inputted to the distribution circuit 6 and the second counter 2. The gate circuit 4 is closed by the signal "L" appearing on the signal line 12 when the counted values are equal, thereby stopping the inputting of the standard pulse signal to the distribution circuit 6 and the second counter 2.

The second counter 2 is an up-down counter which is always inputted with the first judgement signal from the comparator circuit 3, and counts to add to or subtract from its previously holding counted value by the number of pulses of the standard pulse signal inputted thereto. Namely, when the signal appearing on the signal line 11 of the comparator circuit 3 is "H", the previously holding counted value of the second counter 2 is increased one by one and when, in reverse, the signal appearing is "L", it is decreased one by one at each time the standard pulse signal is inputted thereto through the gate circuit 4. When the counted values of the first counter 1 and the second counter 2 become equal one to another, the gate circuit 4 is closed by the signal "I" appearing on the signal line 12 of the comparator circuit 3, and thereby the standard pulse signal from the oscillation circuit 13 cannot be inputted to the second counter 2 and consequently the counting operation of the counter 2 is stopped. The second counter 2 is provided with a CR circuit constituting a reset circuit (not shown) making the previously holding counted value of the second counter 2 zero when a power source is inputted thereto so that the counting operation of the second counter 2 always starts from zero at the time of starting of the vehicle and also the operation of the indication meter 7 always starts from the zero point of this meter.

As in the case of the second counter 2, the distribution circuit 6 is always inputted with the first judgement signal (difference between the two counted values) from the comparator circuit 3, and distributes each standard pulse signal so as to give a regular turning or a reverse turning to the pulse motor according to the signal of "H" or "L". Namely, when the signal appearing on the signal line 11 of the comparator circuit 3 is."H", at each time when the standard pulse signal is inputted to the distribution circuit 6 through the gate circuit 4, plural standard pulses thereof are distributed one by one in sequence to the plural poles of the pulse motor 5 in such a direction that the pulse motor 5 is turned in the regular direction, and when it is "L", the standard signal is distributed in sequence in such a direction that the pulse motor 5 is turned in the reverse direction.

The pointer of the indication meter 7 is turned in conjunction with the turning of the pulse motor 5 and points at a value corresponding to the present vehicle speed or engine speed.

Operation of this speed meter system is as follows:—

If the engine is driven and the wheel axis rotated and thereby the vehicle starts to run, a pulse signal corresponding to the engine speed or the vehicle speed is generated at the pulse signal generating means 8 and is inputted to the first counter 1 after being shaped by the waveform shaping circuit 9. The first counter 1 receives the count starting signal through the signal line 14 from the control circuit 10, and starts counting the number of pulses of the pulse signal after the previously counted value thereof is cleared. The first counter 1 continues to count the pulse signal for a predetermined period of time until it receives the count ending signal through the signal line 15 from the control circuit 10. On receiving this count ending signal the counter 1 gives the counted value to the comparator 3. If the number of pulses corresponding to the engine speed or the vehicle speed counted for the first period of time by the first counter 1 is assumed to be M, since the counted value held by the second counter 2 at this point in time is zero, the counted value M of the first counter 1 is larger than the previously holding counted value "zero" of the second counter 2, and as a result there appears signal "H" on the signal line 11 on which the first judgement signal (difference between the two counted values), as generated by the comparator circuit 3, is to appear, and also there appears the signal "H" on the signal line 12 on which the second judgement signal (equality or inequality of the two counted values) is to appear. Thus, the first pulse of the standard pulse signal from the oscillation circuit 13 passes through the gate circuit 4 and is inputted to the second counter 2 so as to add one to the previously holding counted value of zero, and at the same time is inputted to the distribution circuit 6 so as to move the pointer of the indication meter 7 by one step in the regular direction. The above step operation is continued by inputting of each pulse of the standard pulse signal to the second counter 2 and to the distribution circuit 6 so long as there appears the signal "H" on the signal line 12 of the comparator circuit 3. When the number of pulses of the standard pulse signal entering the second counter 2 becomes M which is equal to the counted value M of the first counter, and consequently the signal "L" replaces the signal "H" on the signal line 12 of the comparator circuit 3, the gate circuit 4 is closed to prevent further inputting of the standard pulse signal to the second counter 2 and the distribution circuit 6. At this time, the second counter 2 holds the value M equal to the counted value M of the first counter 1, and the distribution circuit 6 stops distributing the pulses of the standard pulse signal to the poles of the pulse motor 5. The pointer of the indication meter 7 which was being moved step by step in the positive direction is stopped and at this stopped position points at a value corresponding to the pulse number M.

Thus, the indication meter 7 is stopped to indicate a value corresponding to the engine speed or vehicle speed counted for the first period of time as a result of there being generated from the comparator circuit 3 the signal showing that the counted values of the two counters 1, 2 are equal, and thereby the gate circuit 4 is closed to stop inputting of the standard pulse signal to the second counter 2 and the distribution circuit 6.

If, thereafter, the counter starting signal is generated again from the control circuit 10, the previously counted value M of the first counter 1 is cleared by this signal, and the first counter 1 starts to count the number of pulses of the pulse signal corresponding to the then current engine speed or vehicle speed. This counting is continued until the first counter receives again the counter ending signal from the control circuit 10. Thus, counting for a second predetermined period of time is ended. If it be the case that the counted value of the first counter 1 is now N where N < M, the first judgement signal of the comparator circuit 3 becomes "L", and the second judgement signal becomes "H". The gate circuit 4 opens again, and the standard pulse signal from the oscillation circuit 13 is inputted to the second counter 2 and the distribution circuit 6.

In the second counter 2 the previously holding counted value M is subtracted by one at each time when one pulse of the standard pulse signal is applied thereto, and this subtraction operation is continued until the previously holding counted value is reduced to the counted value N of the first counter 1. At the same time, the distribution circuit 6 distributes each standard pulse signal step by step in the negative direction until the previously counted value M becomes the counted value N.

When the resultant counted value of the second counter 2 becomes N, the first judgement signal of the comparator circuit 3 becomes "L", and the gate circuit 4 shuts. Consequently the second counter 2 holds the pulse number N, and the pointer of the indication meter 7 is turned in the negative direction and is stopped at the position indicating a value corresponding to the new engine speed or vehicle speed.

Thereafter, the step operation is repeated during driving of the vehicle, and thereby the indication meter 7 is always operated sensitively in response to any change in the vehicle speed or engine speed.

As in the present system the input to the comparator circuit 3 from the second counter 2 is via a single line alone, this connection is a very simple one that can be constructed economically and frequency of trouble can be minimised.

Whilst application of the system to a vehicle for metering vehicle running speed or engine rotational speed has been described, it will be appreciated that the system can have other applications where speed has to be metered.

## Claim

A speed meter system comprising, for operating a pulse motor (5) that is driven by an output of a standard pulse signal source (13) through a distribution circuit (6) to drive an indication meter (7), a first counter (1) which counts for a predetermined period of time a pulse signal the count of which over said period corresponds to the speed to be metered, a second counter (2) and a comparator circuit (3) which compares said first count of the first counter (1) and a second count contained in the second counter (2) and generates a first judgement signal showing the difference, positive or negative, between the two counts and a second judgement signal of equality or inequality of the two counts;

characterised in that the system further comprises a gate circuit (4) which is placed in open condition, when for so long as there is any difference between said two counts, to input from the standard pulse signal source (13) to the second counter (2) a standard pulse signal that is added to or subtracted from the second count previously held in the second counter (2) according to said first judgement signal of the comparator circuit (3), the count of said first counter and the changing count of said second counter being continuously compared so that the counted value of the second counter (2) is varied one by one until the resultant counted value becomes equal to the counted value of the first counter (1) whereupon said gate circuit is placed in a closed condition; in that the second counter (2) is provided with a reset circuit for making the counted value thereof zero by inputting of a circuit power source thereinto; and in that the distribution circuit (6) distributing the standard pulse signal inputted thereto through the open condition gate circuit (4) to plural poles of the pulse motor (5) in sequence in the positive or the negative direction according to the first judgement signal of the comparator circuit (3) to operate indication means of the indication meter to indicate the metered speed.

## Patentanspruch

Geschwindigkeitsmeßsystem, das zum Betätigen eines Impuls-motors (5), der mittels eines Ausgangssignals einer Standardimpulssignalquelle (13) über eine Verteilschaltung (6) zum Ansteuern eines Anzeigeinstruments (7) angesteuert wird, mit einem ersten Zähler (1), der für eine vorbestimmte Zeitperiode ein Impulssignal zählt, wobei dessen Zählerstand über die vorbestimmte Zeitperiode mit der zu messenden Geschwindigkeit korrespondiert, einem zweiten Zähler (2) und einer Komparatorschaltung (3), die den Zählerstand des ersten Zählers (1) und einen zweiten Zählerstand, der in dem zweiten Zähler (2) enthalten ist, miteinander vergleicht und ein erstes Bewertungssignal, des die Differenz — mit positivem oder negativem Wert — zwischen den beiden Zählerständen kennzeichnet, sowie ein zweites Bewertungssignal betreffend die Gleichheit oder die Ungleichheit der beiden Zählerstände erzeugt,

dadurch gekennzeichnet, daß das System desweiteren eine Verknüpfungsschaltung (4) aufweist, die in einen geöffneten Zustand versetzt ist, wenn und solange irgendeine Differenz zwischen den zwei Zählerständen besteht, um von der Standardimpulssignalquelle (13) ein Standardimpulssignal in den zweiten Zähler (2) einzugeben, das entsprechend dem ersten Bewertungssignal der Komparatorschaltung (3) zu dem zweiten Zählerstand, der zuvor in dem zweiten Zähler (2) gehalten ist, addiert wird oder von diesem subtrahiert wird, wobei der Zählerstand des ersten Zählers und der sich ändernde Zählerstand des zweiten Zählers fortlaufend miteinander verglichen werden, so daß der Zählwert des zweiten Zählers (2) einerschrittweise verändert wird, bis der sich ergebende Zählwert gleich dem Zählwert des ersten Zählers (1) wird, woraufhin die Verknüpfungsschaltung in einen gesperrten Zustand versetzt wird,

daß der zweite Zähler (2) mit einer Rücksetzschaltung zum Rücksetzen dessen Zählwert auf Null durch Eingeben eines Signals von einer Schaltungs-Stromversorgungsquelle in diesen versehen ist und

daß die Verteilschaltung (6) das Standardimpulssignal,

das in diese über die sich im geöffneten Zustand befindende Verkünpfungsschaltung (4) eingegeben wird, an mehrere Pole des Impulsmotors (5) sequentiell in positiver Richtung oder negativer Richtung in Übereinstimmung mit dem ersten Bewertungssignal der Komparatorschaltung (3) ausgibt, um eine Anzeigeeinrichtung des Anzeigeinstruments zum Anzeigen der gemessenen Geschwindigkeit zu betätigen.

## Revendication

Système compteur de vitesse comprenant, pour faire fonctionner un moteur pas à pas (5) qui est actionné par une sortie d'une source de signal impulsionnel standard (13) à travers un circuit de distribution (6) pour actionner un compteur indicateur (7), un premier compteur (1) qui compte pendant une période de temps prédéterminée un signal impulsionnel dont le compte sur ladite période correspond à la vitesse devant être mesurée, un second compteur (2) et un circuit comparateur (3) qui compare ledit compte du premier compteur (1) à un second compte contenu dans le second compteur (2) et engendre un premier signal d'appréciation montrant la différence, positive ou négative, entre les deux comptes et un second signal d'appréciation d'égalité ou d'inégalité des deux comptes;

caractérisé en ce que le système comprend en outre un circuit de portillon (4) qui est placé en condition ouverte, quand et aussi longtemps qu'il existe une différence entre lesdits deux comptes, pour introduire depuis la source de signal impulsionnel standard (13) dans le second compteur (2) un signal impulsionnnel standard qui est ajouté à ou soustrait du second compte contenu précédemment dans le second compteur (2) selon ledit premier signal d'appréciation du circuit comparateur (3), le compte dudit premier compteur et le compte variable dudit second compteur étant continuellement comparés de sorte que la valeur comptée du second compteur (2) varie unité par unité jusqu'à ce que la valeur comptée résultante devienne égale à la valeur comptée du premier compteur (1) sur lequel est placé ledit circuit de portillon en condition fermée; en ce que le second compteur (2) est équipé d'un circuit de remise à l'état initial pour remettre sa valeur comptée à zéro par l'introduction d'une source d'électricité du circuit à l'intérieur; et en ce que le circuit de distribution (6) distribue le signal impulsionnel standard y étant introduit par le circuit de portillon (4) en condition ouverte vers plusieurs pôles du moteur pas à pas (5) en succession dans le sens positif ou dans le sens négatif selon le premier signal d'appréciation du circuit comparateur (3) pour actionner des moyens indicateurs du compteur indicateur afin d'indiquer la vitesse mesurée.

# FIG.1

# FIG.2

0 068 704